# EUROPÄISCHE PATENTSCHRIFT

(11) **EP 3 045 763 B1**
(45) Veröffentlichungstag und Bekanntmachung des Hinweises auf die Patenterteilung: **25.11.2020**
(21) Anmeldenummer: 15003466.8
(22) Anmeldetag: 05.12.2015
(51) Int. Cl.: F16F 1/38, F16C 27/06, F16F 1/393

(54) **GUMMI-METALL-HÜLSENLAGER**
RUBBER-METAL SLEEVE BEARING
PALIER A COUSSINET-DOUILLE EN METAL ET CAOUTCHOUC

(30) Priorität: 17.01.2015 DE 102015000568
(43) Veröffentlichungstag der Anmeldung: 20.07.2016
(73) Patentinhaber: AUDI AG, 85045 Ingolstadt (DE)
(72) Erfinder: Conrad, Thomas, DE - 91757 Treuchtlingen (DE); Roland, Jörg, DE - 58099 Hagen (DE)
(74) Vertreter: Reichert, Thomas Klaus

(56) Entgegenhaltungen:
- EP-A1- 0 226 702
- DE-T2- 69 512 608
- US-A- 5 172 894

## Beschreibung

Die Erfindung betrifft ein Gummi-Metall-Hülsenlager gemäß der im Oberbegriff des Patentanspruches 1 angegebenen Art.

Derartige Gummi-Metall-Hülsenlager werden beispielsweise im Automobilbau als Lenkerlager im Fahrwerk eingesetzt. Die Außenhülse wird dazu in eine Öffnung des Fahrwerkslenkers eingepresst und die Innenhülse kann in ihrer Durchgangsbohrung eine Schraube als Befestigungsmittel aufnehmen. Hierzu sei exemplarisch auf die Druckschriften DE 10 2009 053 592 A1, DE 10 2011 051 036 A1 oder DE 10 2011 101 182 A1 verwiesen.

Die US 5,887,859 A1 offenbart ein solches Gummi-Metall-Hülsenlager, wobei unter anderem eine sphärische oder eine flache Ausbildung der Zwischenhülse vorgeschlagen wird. Auch die Innenhülse solle je nach Belastungsfall sphärisch, gewölbt oder flach ausgebildet sein. Damit soll die Steifigkeit des Lagers in radialer und axialer Richtung bei einer reduzierten kardanischen Steifigkeit erhöht werden.

Die EP 0 226 702 A1 offenbart ein Gummi-Metall-Hülsenlager bestehend aus drei ineinander angeordneten Metallhülsen und zwischen diesen eingebrachte elastomere Federungskörper, die sich diametral gegenüberliegende nierenförmige Ausnehmungen ausweisen. Um die äußeren elastomeren Federkörper axial und radial zu verspannen, ist die äußere Metallhülse an ihren Enden umgebördelt und im Durchmesser nach der Montage radial verkleinert.

Aus der DE 695 12 608 T2 ist ein gattungsgemäßes Gummi-Metall-Hülsenlager bekannt, bei dem zur Verspannung des Elastomerkörpers die Außenhülse in axialer Richtung betrachtet durchgehend, d. h. über die gesamte axiale Länge der Außenhülse, verlaufende Längsfalten aufweist, die in Umfangsrichtung betrachtet gleichmäßig verteilt angeordnet sind. Dieses Dokument offenbart die Merkmale des Oberbegriffs des Anspruchs 1 und bildet das nächstliegender Stand der Technik.

Der Erfindung liegt die Aufgabe zugrunde, ein Gummi-Metall-Hülsenlager gemäß der im Oberbegriff des Patentanspruches 1 angegebenen Art derart weiterzubilden, dass das Lager in den verschiedenen Raumrichtungen unterschiedliche kardanische Steifigkeiten aufweist.

Diese Aufgabe wird durch die kennzeichnenden Merkmale des Patentanspruches 1 in Verbindung mit den Oberbegriffsmerkmalen gelöst.

Die Unteransprüche bilden vorteilhafte Weiterbildungen der Erfindung.

In bekannter Art und Weise umfasst das Gummi-Metall-Hülsenlager eine Außenhülse mit einer ersten Außenkante und einer in axialer Richtung betrachtet gegenüberliegend angeordneten zweiten Außenkante. Zudem umfasst das Lager eine konzentrisch zur Außenhülse angeordnete Innenhülse sowie eine zwischen der Außenhülse und der Innenhülse liegende und konzentrisch zu diesen angeordnete und durch jeweils eine Elastomerschicht mit diesen verbundenen Zwischenhülse.

Erfindungsgemäß weist die Außenkante der Außenhülse jeweils mindestens zwei abschnittsweise radial nach innen eingedrückte Außenkantenbereiche sowie mindestens zwei unverformte, nicht radial nach innen eingedrückte Kantenbereiche auf. Ferner weist die Außenhülse in axialer Richtung a betrachtet einen zwischen den radial nach innen eingedrückten Außenkantenbereichen angeordneten, radial unverformten Abschnitt auf, wobei in axialer Richtung a betrachtet, die radial eingedrückten Außenkantenbereiche der Außenhülse jeweils in den radial unverformten Abschnitt der Außenhülse übergehen.

Die erfinderische Ausgestaltung der Außenhülse des Gummi-Metall-Hülsenlagers hat den Effekt, dass aufgrund der abschnittsweisen Umformung der Außenkante die darunterliegende Elastomerschicht in diesem Abschnitt vorgespannt ist, sodass das Lager in diesem Bereich eine höhere kardanische Steifigkeit ausweist. Wichtig hierbei ist, dass der eingedrückte Bereich sich nicht über den vollen Umfang erstreckt, d.h. dass in Umfangsrichtung betrachtet die Außenkante mindestens zwei "unverformte", also nicht radial nach innen eingedrückte, Kantenbereiche aufweist.

Hierdurch ist es in vorteilhafter Weise ermöglicht - je gewählter Anordnung der radial nach innen eingedrückten Außenkantenbereiche - die kardanische Steifigkeit des Lagers in den entsprechenden Raumrichtungen gezielt einzustellen. So lassen sich beispielsweise Gummi-Metall-Hülsenlager für den Einsatz bei Fahrwerkslenkern für Kraftfahrzeuge bereitstellen, die in einer Raumrichtung kardanisch weich sind, aber in derselben Raumrichtung dennoch eine hohe Torsionssteifigkeit besitzen.

Vorzugsweise weisen die radial nach innen eingedrückten Außenkantenbereiche eine sichelförmige Kontur auf. Dadurch ist gewährleistet, dass der Mittenbereich des eingedrückten Bereichs den größten Materialversatz aufweist, während der Versatz in beide Umfangsrichtungen immer kleiner wird, bis er schließlich ganz wegfällt.

Gemäß einer besonders vorteilhaften Ausführungsform der Erfindung weisen die Innen- und Außenfläche der Zwischenhülse in Umfangsrichtung betrachtet jeweils mindestens zwei unrund ausgebildete Abschnitte auf, wobei die unrunden Abschnitte der Innen- und Außenfläche in Umfangsrichtung versetzt zueinander angeordnet sind. D.h., die Zwischenhülse ist in vier angrenzende Bereiche unterteilt, wobei sich die unrunden Abschnitte auf der Innenfläche und der Außenfläche beim Umlauf abwechseln. Idealerweise ist alle 90° ein unrunder Abschnitt auf der Innenfläche oder der Außenfläche ausgebildet. Zudem sind die unrunden Abschnitte der Innen-und/oder Außenfläche der Zwischenhülse in Umfangsrichtung betrachtet korrespondierend zu den radial nach innen eingedrückten Außenkantenbereichen der Außenhülse angeordnet.

Diese Anordnung hat den Vorteil, dass der erfindungsgemäße Effekt, nämlich die kardanische Steifigkeit in den entsprechenden Raumrichtungen gezielt einzustellen, verstärkt wird.

In einer weiteren bevorzugten Ausführungsform der Erfindung weist die Innenhülse eine abschnittsweise unrund ausgebildete Außenfläche auf, wobei die unrunden Abschnitte der Innenhülse und die unrunden Abschnitte der Innenfläche der Zwischenhülse benachbart zueinander ausgerichtet sind. Indem die unrunden Abschnitte der Außenfläche der Innenhülse und der Innenfläche der Zwischenhülse zueinander benachbart bzw. sich überlagernd angeordnet sind, kann die kardanische Steifigkeit des Gummi-Metall-Hülsenlagers in der entsprechenden Raumrichtung zusätzlich erhöht werden, da die Elastomerschicht in diesem Bereich dünner wird.

Vorzugsweise sind die Innen- und/oder Außenfläche der Zwischenhülse sphärisch und die unrunden Abschnitte jeweils als ebene Flächen ausgebildet. Eine grundsätzlich sphärische bzw. ballige Ausformung der Zwischenhülse, also einer konkaven Innenfläche und einer konvexen Außenfläche, begünstigt das kardanische Verhalten des Gummi-Metall-Hülsenlagers. Die unrunden Abschnitte werden in dieser Grundform durch ebene Flächen gebildet, die sich über die entsprechenden Teile der Zwischenhülse erstrecken. Gleiches gilt analog für die Innenhülse, wo die Außenfläche der Innenhülse sphärisch und die unrunden Abschnitte jeweils als ebene Flächen ausgebildet sind. Innenhülse und Zwischenhülse sind in ihrer Form jeweils aufeinander abgestimmt, so dass eine gewünschte Dicke und Verteilung der Elastomerschicht zwischen beiden erreicht wird.

In einer bevorzugten Ausführung besteht die Zwischenhülse aus einem Kunststoff. In einer besonders bevorzugten Ausführung wird die Zwischenhülse im Strangpressverfahren hergestellt. Ein extrudierter Kunststoff hat den Vorteil, dass sich eine Zwischenhülse mit einer solch komplexen Geometrie besonders einfach und kostengünstig in großer Stückzahl fertigen lässt.

Weitere Vorteile, und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:
- Fig. 1: eine Schnittansicht eines Gummi-Metall-Hülsenlagers, und
- Fig. 2: eine zur Fig. 1 um 90° gedrehte Schnittansicht des Gummi-Metall-Hülsenlagers.

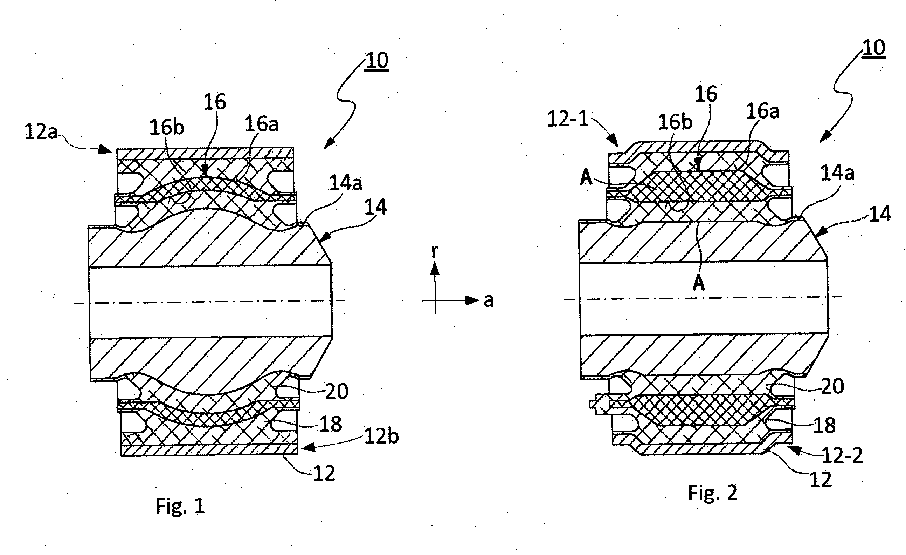

Fig. 1 und 2 zeigen ein insgesamt mit der Bezugsziffer 10 bezeichnendes Gummi-Metall-Hülsenlager.

Das Gummi-Metall-Hülsenlager 10 umfasst eine Außenhülse 12, eine konzentrisch dazu angeordnete Innenhülse 14 sowie eine in radialer Richtung r betrachtet zwischen der Außenhülse 12 und Innenhülse 14, konzentrisch zu diesen angeordnete Zwischenhülse 16.

Die Zwischenhülse 16 ist über eine äußere Elastomerschicht 18 mit der Außenhülse 12 und eine innere Elastomerschicht 20 mit der Innenhülse 14 verbunden. Der Elastomerschichten18, 20 sind an die entsprechenden Hülsen 12, 14 anvulkanisiert und halten diese elastisch nachgiebig in relativer Position zueinander.

Die vorliegend aus Metall bestehende Innenhülse 14 dient der Aufnahme eines Befestigungsmittels, wie z.B. einer Schraube, und weist hierzu eine zylindrische Durchgangsbohrung auf. Die vorliegend ebenfalls aus Metall bestehende Außenhülse 12 umschließt das Gummi-Metall-Lager 10 und kann in eine entsprechende Aufnahmeöffnung eines Fahrwerklenkers eingepresst werden.

Wie aus Fig. 1 und Fig. 2 zu entnehmen ist, sind die in axialer Richtung a betrachtet außen liegenden Außenkanten 12a, 12b der Außenhülse 12 an zwei gegenüberliegenden Bereiche radial nach innen eingedrückt, d.h. die Außenkanten 12a, 12b weisen jeweils zwei radial nach innen eingedrückte Außenkantenbereiche 12-1 und 12-2 auf.

Wie Fig. 1 und 2 weiter zu entnehmen ist, sind die Innenhülse 14 und die Zwischenhülse 16 nicht rotationssymmetrisch. So ist die grundsätzlich sphärisch ausgebildete Außenfläche 14a der Innenhülse 14 in zwei einander gegenüberliegenden Abschnitten A lokal abgeflacht (vgl. Fig. 1 und Fig. 2), also unrund. Die grundsätzlich ebenso sphärisch ausgeformte Zwischenhülse 16 hat insgesamt vier solcher unrunden Abschnitte A, wobei zwei davon auf der Innenfläche 16b einander gegenüberliegend ausgebildet sind und die beiden weiteren auf der Außenfläche 16a einander gegenüberliegend ausgebildet sind.

Die unrunden Abschnitte A von Außenfläche 16a und Innenfläche 16b der Zwischenhülse 16 wechseln sich bei einem Umlauf alle 90° ab, sind als versetzt zueinander. Zudem sind in Umfangsrichtung die unrunden Abschnitte A von Außenfläche 16a der Zwischenhülse 16 korrespondierend zu den radial nach innen eingedrückten Außenkantenbereichen 12-1 und 12-2 der Außenkante 12 angeordnet.

Durch die radial nach innen eingedrückten Außenkantenbereiche 12-1 und 12-2 in Kombination mit der unrunden Ausbildung von Innenhülse 14 und Zwischenhülse 16 ist in vorteilhafter Weise gewährleistet, dass das Lager 10 in diese Raumrichtungen eine höhere kardanische Steifigkeit aufweist.

Vorliegend ist die Zwischenhülse 16 als ein im Strangpressverfahren hergestelltes Kunststoffteil ausgebildet. Trotz der verhältnismäßig komplexen Geometrie der Zwischenhülse 16 ist hierdurch eine einfache und kostengünstige Herstellung gewährleistet.

## Patentansprüche

1. Gummi-Metall-Hülsenlager (10), umfassend
- eine Außenhülse (12) mit einer ersten Außenkante (12a) und einer in axialer Richtung (a) betrachtet gegenüberliegend angeordneten zweiten Außenkante (12b),
- eine konzentrisch zur Außenhülse (12) angeordnete Innenhülse (14), sowie
- eine zwischen der Außenhülse (12) und der Innenhülse (14) liegende und konzentrisch zu diesen angeordnete und durch jeweils eine Elastomerschicht (18, 20) mit diesen verbundene Zwischenhülse (16),
wobei die Außenkanten (12a, 12b) der Außenhülse (12) jeweils mindestens zwei abschnittsweise radial nach innen eingedrückte Außenkantenbereiche (12-1, 12-2) sowie mindestens zwei unverformte, nicht radial nach innen eingedrückte Kantenbereiche aufweist,
**dadurch gekennzeichnet dass** in axialer Richtung (a) betrachtet die Außenhülse (12) einen zwischen den radial nach innen eingedrückten Außenkantenbereichen (12-1, 12-2) angeordneten, radial unverformten Abschnitt aufweist, wobei in axialer Richtung (a) betrachtet, die radial eingedrückten Außenkantenbereiche (12-1, 12-2) der Außenhülse (12) jeweils in den radial unverformten Abschnitt der Außenhülse (12) übergehen.

2. Gummi-Metall-Hülsenlager (10) nach Anspruch 1, **dadurch gekennzeichnet, dass** die radial nach innen eingedrückten Außenkantenbereiche (12-1 12-2) eine sichelförmige Kontur aufweisen.

3. Gummi-Metall-Hülsenlager (10) nach Anspruch 1 oder 2, **dadurch gekennzeichnet, dass** die Außen- und Innenfläche (16a, 16b) der Zwischenhülse (16) in Umfangsrichtung betrachtet jeweils mindestens zwei unrund ausgebildete Abschnitte (A) aufweisen, wobei die unrunden Abschnitte (A) der Außen Innenfläche- und (16a, 16b) in Umfangsrichtung versetzt zueinander angeordnet sind, und wobei in Umfangsrichtung die unrunden Abschnitten (A) der Außen- oder Innenfläche (16a, 16b) der Zwischenhülse (16) korrespondierend zu den radial nach innen eingedrückten Außenkantenbereiche (12-1, 12-2) der Außenhülse (12) angeordnet sind.

4. Gummi-Metall-Hülsenlager (10) nach Anspruch 3, **dadurch gekennzeichnet, dass** die Innenhülse (14) eine abschnittsweise unrund ausgebildete Außenfläche (14a) aufweist, wobei die unrunden Abschnitte (A) der Innenhülse (14) und die unrunden Abschnitte (A) der Innenfläche (16b) der Zwischenhülse (16) benachbart zueinander ausgerichtet sind.

5. Gummi-Metall-Hülsenlager (10) nach Anspruch 2 oder 3, **dadurch gekennzeichnet, dass** unrunden Abschnitte (A) der Außen- und Innenfläche (16a, 16b) der Zwischenhülse (16) jeweils in radialer Richtung betrachtet einander gegenüberliegend angeordnet sind.

6. Gummi-Metall-Hülsenlager (10) nach einem der Ansprüche 2 bis 5, **dadurch gekennzeichnet, dass** die Außen- und/oder Innenfläche (16a, a6b) der Zwischenhülse (16) sphärisch und die unrunden Abschnitte (A) jeweils als ebene Flächen ausgebildet sind.

7. Gummi-Metall-Hülsenlager (10) nach einem der Ansprüche 2 bis 6, **dadurch gekennzeichnet, dass** die Außenfläche (14a) der Innenhülse (14) sphärisch und die unrunden Abschnitte (A) jeweils als ebene Flächen ausgebildet sind.

8. Gummi-Metall-Hülsenlager (10) nach einem der Ansprüche 2 bis 7, **dadurch gekennzeichnet, dass** die Zwischenhülse (16) aus einem Kunststoff ausgebildet ist.

9. Gummi-Metall-Hülsenlager (10) nach Anspruch 8, **dadurch gekennzeichnet, dass** die Zwischenhülse (16) im Strangpressverfahren hergestellt wird.

## Claims

1. Rubber-metal sleeve bearing (10), comprising
- an outer sleeve (12) having a first outer edge (12a) and a second outer edge (12b) which is disposed, viewed in axial direction (a), oppositely situated,
- an inner sleeve (14) arranged concentrically to the outer sleeve (12), and
- an intermediate sleeve (16) situated between the outer sleeve (12) and the inner sleeve (14) and arranged concentrically to them and connected with them via in each case one elastomer layer (18, 20),
wherein the outer edges (12a, 12b) of the outer sleeve (12) has in each case at least two outer edge regions (12-1, 12-2) which are in portions pressed in radially to the inside, as well as at least two edge regions which are not deformed and not pressed in radially to the inside, **characterised in that** viewed in axial direction (a) the outer sleeve (12) has a radially non-deformed portion, arranged between the outer edge regions (12-1, 12-2) which have been pressed in radially to the inside, wherein viewed in axial direction (a) the outer edge regions (12-1, 12-2) of the outer sleeve (12) which have been pressed in radially transition in each case into the radially non-deformed portion of the outer sleeve (12).

2. Rubber-metal sleeve bearing (10) according to claim 1, **characterised in that** the outer edge regions (12-1, 12-2) which are pressed in radially to the inside have a crescent-shaped contour.

3. Rubber-metal sleeve bearing (10) according to claim 1 or 2, **characterised in that** the outer and inner surface (16a, 16b) of the intermediate sleeve (16) viewed in a circumferential direction have in each case at least two portions (A) which are non-circular in shape, wherein the non-circular portions (A) of the outer inner surface and (16a, 16b) are arranged offset to one another in circumferential direction, and wherein in circumferential direction the non-round portions (A) of the outer and inner surface (16a, 16b) of the intermediate sleeve (16) are arranged correspondingly to the outer edge regions (12-1, 12-2) of the outer sleeve (12) pressed in radially to the inside.

4. Rubber-metal sleeve bearing (10) according to claim 3, **characterised in that** the inner sleeve (14) has an outer surface (14a) which is formed non-circular in portions, wherein the non-circular portions (A) of the inner sleeve (14) and the non-circular portions (A) of the inner surface (16b) of the intermediate sleeve (16) are aligned adjacent to one another.

5. Rubber-metal sleeve bearing (10) according to claim 2 or 3, **characterised in that** the non-circular portions (A) of the outer and inner surface (16a, 16b) of the intermediate sleeve (16) are arranged situated opposite one another viewed in each case in radial direction.

6. Rubber-metal sleeve bearing (10) according to any of claims 2 to 5, **characterised in that** outer and/or inner surface (16a, a6b) of the intermediate sleeve (16) is formed spherically and the non-circular portions (A) are in each case formed as plane surfaces.

7. Rubber-metal sleeve bearing (10) according to any of claims 2 to 6, **characterised in that** the outer surface (14a) of the inner sleeve (14) is formed spherically and the non-circular portions (A) are in each case formed as plane surfaces.

8. Rubber-metal sleeve bearing (10) according to any of claims 2 to 7, **characterised in that** the intermediate sleeve (16) is formed of a plastic.

9. Rubber-metal sleeve bearing (10) according to claim 8, **characterised in that** the intermediate sleeve (16) is manufactured in an extrusion process.

## Revendications

1. Palier à manchons en métal et caoutchouc (10), comprenant
- un manchon extérieur (12) avec un premier bord extérieur (12a) et un second bord extérieur (12b) agencé en vis-à-vis dans une direction axiale (a),
- un manchon intérieur (14) disposé de manière concentrique par rapport au manchon extérieur (12), ainsi que
- un manchon intermédiaire (16) situé entre le manchon extérieur (12) et le manchon intérieur (14) et agencé de manière concentrique par rapport à ceux-ci, et relié à ceux-ci par l'intermédiaire d'une couche d'élastomère (18, 20),
dans lequel les bords extérieurs (12a, 12b) du manchon extérieur (12) présente chacun au moins deux zones de bord extérieur (12-1, 12-2) pressées radialement vers l'intérieur par endroits et au moins deux zones de bord non déformées qui ne sont pas pressées radialement vers l'intérieur,
**caractérisé en ce que,** en regardant dans la direction axiale (a), le manchon extérieur (12) présente une section non déformée radialement agencée entre les zones de bord extérieur pressées radialement vers l'intérieur (12-1, 12-2), dans lequel en regardant dans la direction axiale (a), les zones de bord extérieur pressées radialement (12-1, 12-2) du manchon extérieur (12) se fondent chacune dans la section non déformée radialement du manchon extérieur (12).

2. Palier à manchons en métal et caoutchouc (10) selon la revendication 1, **caractérisé en ce que** les zones de bord extérieur (12-1,12-2) présentées radialement vers l'intérieur ont un contour en forme de faucille.

3. Palier à manchons en métal et caoutchouc (10) selon la revendication 1 ou 2, **caractérisé en ce que** les surfaces extérieure et intérieure (16a, 16b) du manchon intermédiaire (16) en regardant dans la direction circonférentielle présentent chacune au moins deux sections formées non circulaires (A), dans lequel les sections non circulaires (A) de la surface extérieure intérieure et (16a, 16b) sont disposées décalées l'une par rapport à l'autre dans la direction circonférentielle, et dans lequel, dans la direction circonférentielle, les sections non circulaires (A) des surfaces extérieure et intérieure (16a, 16b) du manchon intermédiaire (16) sont agencées correspondant aux zones de bord extérieur (12-1, 12-2) pressées radialement vers l'intérieur du manchon extérieur (12).

4. Palier à manchons en métal et caoutchouc (10) selon la revendication 3, **caractérisé en ce que** le manchon intérieur (14) présente une surface extérieure (14a) qui est formée non circulaire par endroits, dans lequel les sections non circulaires (A) du manchon intérieur (14) et les sections non circulaires (A) des surfaces intérieures (16b) du manchon intermédiaire (16) sont orientées à proximité les uns des autres.

5. Palier à manchons en métal et caoutchouc (10) selon la revendication 2 ou 3, **caractérisé en ce que** des sections non circulaires (A) des surfaces extérieure et intérieure (16a, 16b) du manchon intermédiaire (16) sont agencées en vis-à-vis en regardant dans la direction radiale.

6. Palier à manchons en métal et caoutchouc (10) selon l'une des revendications 2 à 5, **caractérisé en ce que** les surface extérieure et/ou intérieure (16a, a6b) du manchon intermédiaire (16) sont sphériques et les sections non circulaires (A) sont formées chacune sous la forme d'une surface plate.

7. Palier à manchons en métal et caoutchouc (10) selon l'une quelconque des revendications 2 à 6, **caractérisé en ce que** la surface extérieure (14a) du manchon intérieur (14) est sphérique et les sections non circulaires (A) sont formées chacune sous la forme d'une surface plate.

8. Palier à manchons en métal et caoutchouc (10) selon l'une des revendications 2 à 7, **caractérisé en ce que** le manchon intermédiaire (16) est formé en une matière plastique.

9. Palier à manchons en métal et caoutchouc (10) selon la revendication 8, **caractérisé en ce que** le manchon intermédiaire (16) est fabriqué dans un procédé d'extrusion.
